(19) Europäisches Patentamt
European Patent Office
Office européen des brevets

(11) **EP 3 266 754 A1**

(12) **EUROPEAN PATENT APPLICATION**

(43) Date of publication:
**10.01.2018 Bulletin 2018/02**

(51) Int Cl.:
**C04B 28/02** [(2006.01)]    **C04B 28/06** [(2006.01)]
**G21F 1/04** [(2006.01)]

(21) Application number: **16178315.4**

(22) Date of filing: **07.07.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ION BEAM APPLICATIONS S.A.
1348 Louvain-la-Neuve (BE)**

(72) Inventors:
• STICHELBAUT, Frédéric
  1348 Louvain-La-Neuve (BE)
• PIÉRARD, Julie
  1000 Brussels (BE)
• KUPERS, Laura
  1000 Brussels (BE)

(74) Representative: **Pronovem
Office Van Malderen
Avenue Josse Goffin 158
1082 Bruxelles (BE)**

(54) **COMPOSITIONS OF LOW ACTIVATION CONCRETE AND USE THEREOF**

(57) The present invention relates to a low-activation concrete comprising high-purity limestone aggregate and white cement, or high-purity limestone aggregate and aluminous cement. The low-activation concrete reduces the content of Europium, Cobalt and Cesium, as well as the content of elements such as Aluminium, Sodium, and Magnesium, when compared to standard concrete compositions and compositions for low-activation concrete already known in the art. The use of the low-activation concrete for forming an interior wall of a particle accelerator vault is provided as well.

Fig. 2

**Description**

The present invention relates to compositions of concrete, more particularly, to compositions of so-called low-activation concrete.

The present invention also relates to the use of low-activation concrete in radiation protection structures, preferably for particle accelerators.

Concrete used in radiation protection structures basically comprises three components: cement, solid aggregates, and water. Furthermore, superplasticizer is a common (fourth) component of concrete nowadays.

Europium (Eu), Cobalt (Co) and Cesium (Cs) are elements being naturally present in the aggregates and cements used in standard concrete with concentrations ranging from 1 ppm to a few tens of ppm (Suzuki, A. et al, Journal of Nuclear Science and Technology 38 (7) (2001), p542-550).

The concrete in biological shielding of, for example, nuclear power plants is subjected to a secondary, thermal neutron flux exceeding roughly $3 \times 10^4$ neutrons per $cm^2$ per second. As a consequence, $^{151}Eu(n,y)$, $^{153}Eu(n,y)$, $^{59}Co(n,y)$, and $^{133}Cs(n,y)$ reactions induce dominant long-lived residual radioisotopes, i.e. $^{152}Eu$, $^{154}Eu$, $^{60}Co$, and $^{134}Cs$, respectively, in the concrete of the biological shielding. These four radioisotopes alone occupy 99% to 100% of the total residual radioactivity in terms of clearance level value induced in the ordinary concrete at the time of decommissioning of the nuclear power plant. Hence, at the end-of-life (EOL) of the nuclear power plant, the remaining activated parts of the concrete need to be segregated from the non-activated parts. The activated concrete exceeding the clearance levels (as defined by the International Atomic Energy Agency (IAEA) for nuclear waste) is categorized as Low Level radioactive Waste (LLW) and needs to be stored in a special area, to allow a decrease of the activity with time before actual clearance.

In the context of the present description, the term "clearance" (or clearance level, CL) refers to the radioactive classification permissible for disposing of material as non-radioactive waste.

A major problem to be dealt with related to radiation protection structures made of concrete is the induced concrete activation therein, the resulting production of the Low Level radioactive Waste (LLW), and the costs involved in the treatment of this LLW at the time of dismantling the structure.

In the art, efforts have already been made to develop compositions of low-activation concrete.

In the context of the present description, "low-activation concrete" (LAC) refers to a concrete that combines a radiation shield function with a function of reducing residual radiations.

More particularly, various compositions of low-activation concrete have already been proposed and used in the art in installations in association with atomic powers (e.g. nuclear power plants) and in particle accelerators (e.g. cyclotrons, synchrotrons), in order to reduce the induced radioactivity in the concrete shielding, and hence to reduce the amount of LLW.

For example, in JP2008157801 a boron-containing compound is mixed in concrete to make neutron-shielding low-activation concrete. This low-activation concrete can for instance be utilized in a floor surface of an irradiation chamber in a cyclotron. Also in JP2006038467 and in JP2001305278 boron is used in the concrete to absorb thermal neutrons.

In JP2004256376, a low-activation concrete is prepared at a low cost by using general-purpose Portland cement without using a specific cement such as white cement. The prepared low-activation concrete contains Portland cement, limestone fine aggregate containing MgO in an amount of less than or equal to 20 mass %, and limestone coarse aggregate. It is described that the low-activation concrete having such a constitution is hardly activated, even when it is irradiated with radiation such as neutrons, and that it is suitably used in the application for shielding the radiation.

JP2008013426 provides a low activation cement reducing residual radioactivity and having radiation shielding ability. The cement in 100 parts contains 40-55 parts of CaO, 16-40 parts of $Al_2O_3$, 10-34 parts $SiO_2$, less than 0.3 mg/kg (0.3 ppm) of Eu, and less than 15 mg/kg (15 ppm) of Co.

JP2008239362 describes low-activation concrete containing Co, Eu, and Cs of which the total content is less than or equal to 30 mg/kg (30 ppm) based on the total amount of concrete.

EP2128872, discloses a low-activation hydraulic setting composition and low-activation cement comprising said composition. The low-activation hydraulic composition comprises calcium aluminosilicate ($CaAl_2Si_2O_8$) having a chemical composition comprising 25 to 55 parts of CaO, 16 to 45 parts of $Al_2O_3$, 23 to 40 parts of $SiO_2$, 0 to 1 part of MgO and 0 to 4 parts of $ZrO_2$, with an Eu content being less than 0.3 mg/kg and a Co content being less than 15 mg/kg.

JP2007269516 describes low-activation concrete in which white fused alumina as fine aggregate, lime stone as coarse aggregate and flyash as an admixture are incorporated. It is reported that the activation and the degradation with time caused by a high temperature atmosphere are suppressed, having an excellent heat removing property, shielding property and workability.

Kinno, M. et al in Journal of Nuclear Science and Technology 39 (12) (2002) p1275-1280 identified several low-activation raw materials, such as white Portland cement and high-alumina cement as low-activation cements, and limestone, quartzite, colemanite, alumina-ceramics as low-activation aggregates, for the fabrication of low-activation concrete. It was reported that low-activation concrete compounded from such low-activation raw materials serves for neutron shielding in nuclear power plants.

Also Kinno, M. et al in Progress in Nuclear Science and Technology 1 (2011) p28-31 discloses low-activation concrete made of low-activation raw materials, such as Dunite, Serpentite, Limestone, Colemanite, Baryte, High purity limestone, Quartzite, silica sand, Fused alumina, $B_4C$ sand as suitable low-activation aggregates; Ordinary Portland, Moderate-heat Portland, Low-heat Portland, White cement, Low-activation low-heat cement, High alumina cement, as suitable low-activation cements; and Fly ash, Blast furnace slag, Low-activation limestone powder, Low-activation silica fume, Low-activation calcium-aluminates-silicate (CAS) additive, $B_4C$ powder, as suitable additives. The low-activation multilayer shielding structure of a light water reactor has been designed using various types of low-activation concrete composed of such low-activation raw materials.

Suzuki, A. et al, in Journal of Nuclear Science and Technology 38 (7) (2001), p542-550 discussed the low activation concrete formed from limestone as aggregate and white Portland cement. The concentrations of $^{152}$Eu, $^{60}$Co, and $^{134}$Cs in this low activation concrete were found to be 0.049, 0.16, and 0.060 ppm, respectively. The limestone concrete was reported to be excellent as biological shielding concrete.

However, although the compositions of low-activation concrete already known in the art aim at reducing the induced radioactivity in the concrete shielding, a major drawback is that they still do produce a relatively high amount of LLW. As a consequence, the related cost of the corresponding waste treatment remains relatively high.

Despite the efforts already made in the art, it is desirable to provide alternative and improved compositions of low-activation concrete which allow for (further) reducing the induced radioactivity when used in radiation protection structures. It is desirable to provide such low-activation concrete allowing for less production of amount of LLW, without compromise on the quality of the concrete. It is also desirable to lower the costs involved in the treatment of the LLW at the time of dismantling the structure.

Aspects of the present invention therefore envisage providing alternative and improved compositions of low-activation concrete, which overcome the disadvantages of prior art compositions.

More particularly, it is envisaged to provide compositions of low-activation concrete, further reducing the induced activation in the concrete, when compared to standard concrete compositions and compositions for low-activation concrete already known in the art.

According to aspects of the invention, there is therefore provided a low-activation concrete, as set out in the appended claims.

According to another aspect of the invention, there is provided the use of the low-activation concrete of the invention, as set out in the appended claims.

Advantageous aspects of the present invention are set out in the dependent claims.

Aspects of the invention will be described in more detail with reference to the appended drawings.

**Figure 1** shows the evolution of the Clearance Index along (a) and inside (b) the North wall of the C70 vault using standard concrete using Monte Carlo simulations **(Figure 1(b)** being on a logarithmic scale).

**Figure 2** depicts the evolution of the Clearance Index (logarithmic scale) in the North wall of the C70 vault as a function of depth for standard concrete and LAC type S1 concrete. The impact of an additional cooling period of 10 or 20 years is also displayed.

**Figure 3** depicts the Clearance Index evolution (logarithmic scale) along (a) and inside (b) the West wall of the S2C2 vault using standard concrete and LAC type EI concrete.

**Figure 4** depicts the Clearance Index obtained in the (a) South wall, (b) West wall, (c) East wall and (d) North wall of the C230 vault using standard concrete and low activation concrete type EI.

**Figure 5** shows the evolution of the Clearance Index along (a) and inside (b) the East wall of the C18p vault using standard concrete using Monte Carlo simulations **(Figure 5(b)** being on a logarithmic scale).

**Figure 6** depicts the comparison of the Clearance Index (logarithmic scale) inside the East wall of the C18p vault using standard concrete and low-activation concrete type EI and S1: (a) right after facility shutdown; (b) after an additional 5 years cooling time.

According to an aspect of the invention, there is provided a low-activation concrete (LAC) comprising high-purity limestone as aggregate and white cement or high-alumina cement.

In the context of the present description, high-purity limestone refers to carbonate rock containing higher than (about) 97% by weight calcium carbonate ($CaCO_3$, usually as calcite). More particularly, high-purity limestone refers to carbonate rock containing between (about) 97.0 % and (about) 98.5 % by weight calcium carbonate, or between (about) 54.3 % and (about) 55.2 % by weight calcium oxide (CaO).

Preferably, the high-purity limestone used in the low-activation concrete of the invention comprises between (about) 54.3 % and (about) 55.2 % by weight calcium oxide (CaO), between (about) 0.8 % and (about) 1.0 % by weight magnesia (MgO), between (about) 0.2 % and (about) 0.6 % by weight silica ($SiO_2$), between (about) 0.05 % and (about) 0.1 % by weight iron oxide ($Fe_2O_3$), less than (about) 0.3 % by weight aluminium oxide ($Al_2O_3$), and less than (about) 0.1 % by weight sodium oxide (Na$_2$O).

The chemical composition of the high-purity limestone is determined using X-ray fluorescence analysis, known by those skilled in the art.

Advantageously, the low-activation concrete comprises (about) 75% to (about) 95% by weight high-purity limestone aggregate.

More advantageously, the low-activation concrete comprises (about) 75% to (about) 85% by weight high-purity limestone aggregate.

In the present invention, white cement or high-alumina cement is used instead of grey cement to prepare the low-activation concrete. Advantageously, white cement is used.

Advantageously, the white cement used for preparing the LAC of the invention comprises (about) 60% to (about) 68% by weight CaO, (about) 15% to (about) 22% by weight SiO$_2$, (about) 2% to (about) 6% by weight Al$_2$O$_3$, (about) 0.1% to (about) 0.18% Na$_2$O, and (about) 1% to (about) 3% MgO.

More advantageously, the white cement used for preparing the LAC of the invention comprises (about) 63% to (about) 66% by weight CaO, (about) 19% to (about) 21.5% by weight SiO$_2$, (about) 3% to (about) 5% by weight Al$_2$O$_3$, (about) 0.14% to (about) 0.17% Na$_2$O, and (about) 1.5% to (about) 2.5% MgO.

The chemical content of the white cement used for preparing the LAC of the invention is measured in accordance with standard EN 196-2.

In the context of the present description, aluminous cement refers to high-alumina cement or calcium aluminate cement.

Preferably, the aluminous cement used in the low-activation concrete of the invention comprises an amount higher than (about) 50.0% by weight alumina (Al$_2$O$_3$); more preferably an amount higher than (about) 68.5% by weight alumina.

More preferably, the aluminous cement comprises more than (about) 50.0% by weight Al$_2$O$_3$, less than (about) 40.0% by weight CaO, less than (about) 6.0% SiO$_2$, and less than (about) 2.8% by weight Fe$_2$O$_3$ ; even more preferably the aluminous cement comprises more than (about) 68.5% by weight Al$_2$O$_3$, less than (about) 30.5% by weight CaO, less than (about) 0.7% SiO$_2$, and less than (about) 0.3% by weight Fe$_2$O$_3$.

The chemical content of the aluminous cement used for preparing the LAC of the invention is measured in accordance with standard EN 196-2.

In the compositions of the low activation concrete according to the present invention, the concentrations of Europium, Cobalt and Cesium are reduced compared to standard concrete compositions, so as to (further) reduce (or even eliminate) the production of nuclear wastes.

More particularly, in the compositions of the low activation concrete according to the present invention, the concentration of Europium is reduced to an unexpected degree compared to compositions for low-activation concrete already known in the art.

The low activation concrete compositions of the invention allow a (further) minimization of the Eu, Co, and Cs concentrations, while preserving the same physical properties as in standard shielding concrete or low-activation shielding concrete already known in the art. In other words, the radiation shield function of the low activation concrete of the invention is maintained and combined with a function of reducing residual radiations.

The low activation concrete of the present invention comprises (or consists of) three components, more particularly, cement, solid aggregates, and water.

Advantageously, the low-activation concrete of the invention comprises high-purity limestone aggregate and aluminous cement.

Advantageously, in the low-activation concrete of the invention comprising high-purity limestone aggregate and aluminous cement, the Eu content is less than 0.01 ppm, the Co content is less than 0.26 ppm, and the Cs content is less than 0.03 ppm.

More advantageously, in the low-activation concrete of the invention comprising high-purity limestone aggregate and aluminous cement, the Eu content is less than 0.009 ppm, the Co content is less than 0.15 ppm, and the Cs content is less than 0.03 ppm.

Alternatively and more advantageously, the low-activation concrete of the invention comprises high-purity limestone aggregate and white cement.

Advantageously, in the low-activation concrete of the invention comprising high-purity limestone aggregate and white cement, the Eu content is less than 0.04 ppm, the Co content is less than 0.80 ppm, and the Cs content is less than 0.1 ppm.

More advantageously, in the low-activation concrete of the invention comprising high-purity limestone aggregate and white cement, the Eu content is less than 0.025 ppm, the Co content is less than 0.25 ppm, and the Cs content is less than 0.07 ppm.

The LAC of the present invention reduces the content of Eu by a factor of (about) 34 to (about) 230, the content of Co by a factor of (about) 106 to (about) 152, and the content of Cs by a factor of (about) 34 to (about) 108, when compared to standard concrete.

As a consequence, the low-activation concrete of the invention comprising high-purity limestone aggregate and either white cement or aluminous cement reduces the activation of the concrete induced by low-energy neutrons compared to standard concrete, thereby producing less amount of LLW. Hence, less special storage area is needed, and the cost of treatment of the waste at the time of dismantling the structures (decommissioning cost) is reduced.

More particularly, in the compositions of the low activation concrete according to the present invention, the concentration of Europium is reduced to an unexpected degree compared to compositions for low-activation concrete already known in the art.

Moreover, it has been found that the low-activation concrete of the invention comprising high-purity limestone aggregate and white cement offers the additional advantage of being poor in Aluminium (Al), Sodium (Na), and Magnesium (Mg), next to reducing the concentrations of Eu, Co and Cs, when compared to standard concrete compositions and compositions for low-activation concrete already known in the art, but also when compared to the LAC of the invention comprising high-purity limestone aggregate and aluminous cement.

This is a distinctive advantage of the present invention with respect to the low-activation concretes already developed in the art for nuclear power plants.

The low-activation concrete of the invention comprising high-purity limestone aggregate and white cement reduces the content of Al, Na, and Si, when compared to standard concrete compositions and compositions for low-activation concrete already known in the art.

Al, Na, and Si (and also Mg) are elements responsible for $^{22}$Na production with high-energy neutrons.

Hence, the low-activation concrete of the invention comprising high-purity limestone aggregate and white cement not only reduces the activation of the concrete induced by low-energy neutrons, but also its activation by high-energy neutrons, thereby thus (further) reducing the overall induced radioactivity when using the concrete in radiation protection structures such as medium and high-energy accelerators, when compared to standard concrete compositions, compositions for low-activation concrete already known in the art, and the LAC of the invention comprising high-purity limestone aggregate and aluminous cement.

In nuclear power plants, the neutrons involved only have an energy of below (about) 15 MeV. Hence, the production of $^{22}$Na is not to be considered, and no amount of LLW due to this particular activation of the concrete will be generated.

To the contrary, particle accelerators used in medical applications, as a diagnostic tool or in therapy, for example in the treatment of many cancers, are based on the use of proton beams with various beam energies ranging from a few MeV up to even (about) 230 MeV.

Indeed, cyclotrons with energy ranging between (about) 10 MeV and (about) 70 MeV to generate isotopes are for example used in cancer diagnostic, while cyclotrons producing (about) 230 MeV proton beams are used in Proton Therapy (PT).

The proton beams interact with matter along their path thereby generating important fluxes of secondary neutrons with energies thus ranging from thermal energy up to the maximal proton energy. These secondary neutrons will in turn interact with the biological shielding surrounding the cyclotrons and can lead to the production of additional long-lived isotopes in the shielding concrete.

Taking the energy of the proton beams involved into account, two neutron-induced mechanisms are in fact responsible for the concrete activation of the radiation protection structures (biological shielding) of these accelerators.

A first type of neutron-induced mechanism is thus the already above mentioned capture of low-energy neutrons or thermal neutrons on rare elements present in the concrete of the radiation protection structures of the accelerators, such as Europium, Cobalt and/or Cesium, leading to the production of long-lived isotopes in the concrete, such as $^{152}$Eu (having an half-life $T_{1/2}$ of 13.33 years).

The development of low-activation concrete in the art mainly focussed on concrete compositions for biological shielding in nuclear power plants only involving the generation of these secondary, thermal (low-energy) neutron fluxes. As a consequence, in the art, only the first type of neutron-induced mechanism for concrete activation was taken into account.

Nevertheless, in many particle accelerators, a second type of neutron-induced mechanism is responsible for an important part of the concrete activation as well (next to the first type of neutron-induced mechanism by low-energy neutrons).

The second type of neutron-induced mechanism are the nuclear reactions induced by high-energy neutrons (i.e. by neutrons having an energy of more than (about) 20 MeV) on the elements Sodium, Aluminium, Magnesium, and/or Silicium, also commonly being present in the concrete of the radiation protection structures of the accelerators. These spallation reactions on concrete elements Na, Al, Mg, Si, i.e. $^{23}$Na$(n,x)$, $^{27}$Al$(n,x)$, $^{24}$Mg$(n,x)$, and/or $^{28}$Si$(n,x)$, generate nuclides such as $^{22}$Na (having an half-life $T_{1/2}$ of 2.6 years) in the shielding of the accelerators.

As a consequence, the total accumulation of all the generated radioactive nuclides during the lifetime of the accelerator facility is responsible for the overall concrete activation. At the end-of-life of the facility, the activated concrete parts (i.e. those activated by capture of both low-energy neutrons and high-energy neutrons) thus need to be segregated from the non-activated parts.

According to the present invention, it has been found that for cyclotron-based systems it is advantageous to carefully select the components, more particularly, the aggregate and cement, used for forming the low-activation shielding concrete to reduce, or even eliminate completely, the elements responsible for the production of long-lived isotopes by neutron capture, i.e. Eu, Co and Cs. Moreover, additionally carefully selecting the aggregate and cement to also being poor in Na, Mg, and Al (and/or even Si) reduces the production of $^{22}$Na as well.

According to another aspect of the invention, there is provided the use of the low-activation concrete according to the invention for forming (or casting) the interior wall(s) (or inner part of the wall(s)) of a particle accelerator vault.

More particularly, there is provided the use of the low-activation concrete according to the invention for forming a low-activation concrete layer enclosing the periphery of a cyclotron (or particle accelerator, or any cyclotron-based facility).

Advantageously, the low-activation concrete according to the invention is used in a multi-layered wall comprising a physical separation.

More advantageously, the low-activation concrete according to the invention is used in a two-layered wall, wherein the inner layer (or inner part) of the wall comprises (or is made of) the low-activation concrete and the rest of the wall comprises (or is made of) standard concrete.

In the context of the present description, "standard concrete" (SC) refers to a concrete that can be used in radiation protection structures, however not having the function of reducing residual radiations in the concrete.

Even more advantageously, the physical separation between the (two) layers of the wall comprises (or consists of) a plastic sheet.

Replacing the standard concrete in the inner layer (or inner part) of the walls by low-activation concrete according to the invention, reduces in a striking way the amount of LLW produced inside any cyclotron-based facility, compared to the use of standard concrete.

The present invention is further illustrated by means of the following examples.

## EXAMPLES

### Example 1: Neutron activation analysis on basic concrete components

Different samples of aggregates, sand and cements from different providers, i.e. from Lhoist, Sibelco, CBR, Holcim, and Kerneos, were submitted to a neutron activation analysis (NAA) using the BR1 nuclear reactor from SCK-CEN in Belgium.

The Eu, Co and Cs concentrations in the basic concrete components were measured two months after the irradiations using a high-purity Germanium spectrometer. The results are presented in **Table 1.**

**Table 1:** NAA measurements of Eu, Co, and Cs concentrations in basic concrete components.

| Provider | Concrete components | Element | | |
|---|---|---|---|---|
| | | Eu (ppm) | Co (ppm) | Cs (ppm) |
| **Lhoist** | Geostandard CAL-S | 0.0066 | 0.0299 | 0.0085 |
| | Limestone BE1114.408.3 | < 0.001 | 0.11 | 0.0257 |
| | Limestone BE1114.408.4 | < 0.0007 | 0.078 | 0.0393 |
| | Limestone BE1114.408.5 | < 0.0005 | 0.134 | 0.024 |
| | Limestone BE1111.403.8 | < 0.001 | 0.0467 | 0.0292 |
| **Sibelco** | Silverbond M400 | 0.0189 | 0.151 | 0.085 |
| | Sand M31 | 0.0346 | 0.225 | 0.079 |
| **CBR** | White cement CEM I 42.5 N | 0.268 | 1.11 | 0.608 |
| | White cement CEM I 52.5 R | 0.278 | 1.08 | 0.617 |
| | White cement CEM II/A-LL 42.5 N | 0.234 | 0.95 | 0.498 |
| | White cement CEM I/A-LL 52.5 N | 0.25 | 1.05 | 0.557 |
| **Holcim** | Grey cement CEM I 52.5 R HES | 1.21 | 13.5 | 1.96 |

(continued)

| Provider | Concrete components | Element | | |
|---|---|---|---|---|
| | | Eu (ppm) | Co (ppm) | Cs (ppm) |
| | Grey cement CEM III/A 32.5 N LA | 1.66 | 6.75 | 1.5 |
| Kerneos | Aluminous cement SECAR 51 | 2.39 | 4.23 | 0.19 |
| | Aluminous cement SECAR 71 | 0.0214 | 0.382 | 0.03 |

All the irradiated limestone aggregates from **Table 1,** in fact being all high-purity limestones, exhibit extremely low contents of Eu, Co and Cs, almost all below 0.1 ppm or even less. This demonstrates that high-purity limestone rocks are the ideal aggregates for LAC.

White cements from CBR also contain low level of impurities, with an average Eu concentration of 0.25 ppm. This can be directly compared to grey cements from Holcim containing between 1.2 and 1.7 ppm of Eu.

The aluminous cement SECAR 71 from Kerneos also exhibits very low levels of impurities, much lower than the SECAR 51 aluminous cement from the same provider.

**Example 2: Compositions of low-activation concrete**

Based on the results from **Table 1,** concrete compositions are formulated allowing a minimization of the Eu, Co and Cs concentrations while preserving the same physical properties as standard shielding concrete.

A first type of concrete, LAC EI, is made of 1914 kg high-purity limestone aggregates combined with 260 kg white cement from CBR. The LAC E1 type sample thus comprises (about) 88% by weight high-purity limestone aggregate. Two samples of poured EI type LAC using two different types of white cement (i.e. white cement CEM I 42.5 N or white cement CEM II/A-LL 42.5 N) were prepared.

A second type of concrete, LAC S1, is made of 1815 kg high-purity limestone aggregates combined with 400 kg Secar 71 aluminous cement from Kerneos. The LAC S1 type sample thus comprises (about) 82% by weight high-purity limestone aggregate. One sample of poured S1 type LAC was prepared.

The expected concentrations of Eu, Cs and Co in the two types of low activation concretes are calculated using the measurements obtained in **Table 1** and are presented in **Table 2** as "From components".

Given the extremely low Eu concentrations expected from high-purity limestone aggregates (0.001 ppm, cf. **Table 1**), it is clear that most of the remaining Eu in the LAC comes from the selected cement.

Additionally, a sample of poured standard concrete made of ordinary aggregates and grey cement from Holcim was prepared.

All the samples were then irradiated in the BR1 nuclear reactor from SCK-CEN in Belgium. Two months after the irradiations, the Eu, Co and Cs concentrations in the concrete samples were measured using a high-purity Germanium spectrometer. The resulting Eu, Co and Cs concentrations are presented in **Table 2** as "Measured".

**Table 2:** Concentrations of Eu, Co, and Cs in standard concrete compared to low-activation concrete samples of the invention.

| Concrete type | Result | Eu (ppm) | Co (ppm) | Cs (ppm) |
|---|---|---|---|---|
| **Standard** | World average | 1.08 | 21.9 | 3.21 |
| | Measured | 0.46 ± 0.02 | 15.7 ± 0.7 | 0.68 ± 0.04 |
| **LAC EI** | From components | 0.0316 | 0.2066 | 0.0942 |
| | Measured 1 | 0.023 ± 0.003 | 0.75 ± 0.04 | 0.052 ± 0.007 |
| | Measured 2 | 0.024 ± 0.003 | 0.20 ± 0.01 | 0.062 ± 0.007 |
| **LAC S1** | From components | 0.0047 | 0.144 | 0.0297 |
| | Measured | 0.0081 ± 0.0004 | 0.25 ± 0.01 | 0.013 ± 0.002 |

For the standard concrete, the concentrations of Eu, Co, and Cs ranging from 1 ppm to a few tens of ppm, as the global averages obtained by Suzuki et al (cf. Suzuki, A. et al, Journal of Nuclear Science and Technology 38 (7) (2001), p542-550).

For the LAC EItype, the measured values are usually better than the expected value, with a remarkable value of 0.023 ppm for Eu concentration, and Co and Cs concentrations well below 1 ppm.

For the LAC S1 type, the measured concentration for Eu is a factor of (about) two larger than expected, but remains extremely good with a value of 0.0081 ppm. The Co and Cs concentrations are also very good with 0.25 ppm and 0.013 ppm, respectively.

The concrete is thus able to reduce the content of Eu by a factor of (about) 34 to (about) 230, when comparing the expected concentration of Eu in the two types of low activation concretes to the world average value of standard concrete. The concentrations of Co and Cs are also strongly reduced, i.e. by a factor of (about) 106 to (about) 152, and by a factor of (about) 34 to (about) 108, respectively.

More particularly, comparing the measured values for the LAC of the invention to the world average values for standard concrete, using the LAC reduces the content of Eu by a factor of (about) 47 to (about) 133 when compared to using standard concrete. The concentrations of Co and Cs are also reduced, i.e. by a factor of (about) 29 to (about) 110, and by a factor of (about) 52 to (about) 247, respectively.

The good agreement between the values obtained from the measurement of individual components and from the measurement of real concrete samples confirms the absence of any additional source of Eu, Co and Cs in the mixed concretes.

Furthermore, the low-activation concrete of the invention comprising high-purity limestone aggregate and white cement (thus the LAC EItype) offers the additional advantage of being poor in Aluminium (Al), Sodium (Na), and Magnesium (Mg), next to reducing the concentrations of Eu, Co and Cs.

The high-purity limestone used in the present invention contains between (about) 97.0 % and (about) 98.5 % by weight calcium carbonate ($CaCO_3$), or between (about) 54.3 % and (about) 55.2 % by weight calcium oxide (CaO).

Preferably, the high-purity limestone used in the low-activation concrete of the invention comprises between (about) 54.3 % and (about) 55.2 % by weight calcium oxide (CaO), between (about) 0.8 % and (about) 1.0 % by weight magnesia (MgO), less than (about) 0.3 % by weight Aluminium oxide ($Al_2O_3$), and less than (about) 0.1 % by weight sodium oxide ($Na_2O$).

The high-purity limestone used in the present invention thus has a negligible contribution of Al, Na, and Mg to its total content.

Grey cement used for the preparation of standard concrete contains 40% to 52% by weight CaO, 26% to 31% by weight $SiO_2$, 7.5% to 9% by weight $Al_2O_3$, 0.25% to 0.3% by weight $Na_2O$, and 5% to 6.5% by weight MgO.

The white cement used in the low-activation concretes of the present invention preferably comprises 60% to 68% by weight CaO, 15% to 22% by weight $SiO_2$, 2% to 6% by weight $Al_2O_3$, 0.1% to 0.18% $Na_2O$, and 1% to 3% MgO; more preferably comprises 63% to 66% by weight CaO, 19% to 21.5% by weight $SiO_2$, 3% to 5% by weight $Al_2O_3$, 0.14% to 0.17% by weight $Na_2O$, and 1.5% to 2.5% by weight MgO.

The low-activation concrete of the present invention, prepared from high-purity limestone aggregate and white cement, reduces the content of Al, Na, and Si (next to reducing the concentrations of Eu, Co and Cs), when compared to standard Portland concrete (cf. **Table 5** in atomic composition section of Example 3).

### Example 3: Properties of low-activation concrete

### Physical properties

Different samples of low-activation concrete have been prepared and their physical properties are measured in accordance with NBN standards (from the "Bureau for Standardisation" (NBN), Belgium).

The concrete formulations of the samples are given in **Table 3.**

**Table 3:** Concrete formulations.

| Constituent | Concrete formulation | | | |
| --- | --- | --- | --- | --- |
| | No.1 | No.2 | No.3 | No.4 |
| Grey cement CEM III/A 32.5 N LA [kg/m$^3$] | 260 | 0 | 0 | 0 |
| White cement CEM I 42.5 N [kg/m$^3$] | 0 | 260 | 0 | 0 |
| White cement CEM II/A-LL 42.5 N [kg/m$^3$] | 0 | 0 | 260 | 0 |
| Aluminous cement SECAR 71 [kg/m$^3$] | 0 | 0 | 0 | 400 |
| Rhine sand - 0/1 (dry) [kg/m$^3$] | 87 | 0 | 0 | 0 |
| Rhine sand - 0/4 (dry) [kg/m$^3$] | 622 | 0 | 0 | 0 |

(continued)

| Constituent | Concrete formulation | | | |
|---|---|---|---|---|
| | No.1 | No.2 | No.3 | No.4 |
| Common limestone - 4/6 (dry) [kg/m$^3$] | 339 | 0 | 0 | 0 |
| Common limestone - 6/14 (dry) [kg/m$^3$] | 513 | 0 | 0 | 0 |
| Common limestone - 14/20 (dry) [kg/m$^3$] | 398 | 0 | 0 | 0 |
| Limestone BE1111.403.8 - 0/4 (dry) [kg/m$^3$] | 0 | 805 | 805 | 752 |
| Limestone BE1111.403.8 - 4/6 (dry) [kg/m$^3$] | 0 | 165 | 165 | 154 |
| Limestone BE1111.403.8 - 6/16 (dry) [kg/m$^3$] | 0 | 827 | 827 | 768 |
| Total water [kg/m$^3$] | 165 | 228 | 228 | 227 |
| Superplasticizer [% of cement weight] | 1.3 | 2.3 | 1.8 | 1.3 |

The reference sample No.1 is a sample of standard concrete based on Rhine sand, common crushed limestone and grey cement.

The Eu, Co, and Cs concentrations in the concrete components of samples No. 2 to 4 are given in **Table 1** of Example 1.

For formulations No. 1 to 3, based on a grey cement (CEM III/A) or a white cement (CEM I 42.5 N, or CEM II/A-LL 42.5 N), the cement and water dosing is fixed by the requirements of standards NBN EN 206 and NBN B15-001 corresponding to environmental class EI, i.e. for reinforced concrete:

- minimum cement content of 260 kg per m$^3$ of concrete; and
- effective water to cement weight ratio (W/C) of maximum 0.65 (and taken as 0.60 to limit risks of concrete segregation).

For formulation No. 4 based on high alumina cement, the cement and water dosing is fixed on the basis of:

- minimum dosing of cement 400 kg per m$^3$ of concrete;
- effective water to cement weight ratio (W/C) of maximum 0.40.

For each formulation:

- the different fractions of sands and aggregates were combined in order to obtain a continuous granulometric curve within the range recommended by standard NBN EN 480-1. The "limestone BE1111.403.8 fraction 0/4" however contains a very high amount of fines, i.e. containing more than 25% of fine aggregate lower than 63 $\mu$m size, making it difficult to obtain the desired curve. Therefore, the fraction of less than 63 $\mu$m size of the "limestone BE1111.103.8 fraction 0/4" was regarded as filler and thus not as part of the granulometric skeleton;
- the total water quantity was adjusted by taking into account the water absorption of the aggregates, which is much higher for the pure limestones (up to 5.5% by weight, after 24h immersion) than for common limestone (max. 0.1 % by weight);
- the admixture (superplasticizer based on polycarboxylate ether) dosage was adjusted so as to obtain a conventional consistency for ready-mixed concrete, i.e. consistency class S4 within the meaning of standards NBN EN 206 and NBN B15-001.

In the context of the present description, the term "total water quantity of a concrete mixture" refers to the effective water quantity taking part in the cement hydration reaction incremented by the water quantity absorbed by the sand and aggregate.

Three tests were performed on the freshly prepared concrete samples:

- Determination of consistency class by measuring the slump (in accordance with NBN EN 12350-2);
- Determination of density (in accordance with NBN EN 12350-6);
- Determination of air content (in accordance with NBN EN 12350-7).

The fresh concretes were prepared using an Eirich mixer with maximum capacity 100 litres.

Tests were also performed on the hardened concrete:

- Determination of apparent density (in accordance with NBN EN 12350-6);
- Determination of compressive strength (in accordance with NBN EN 12390-3);
- Determination of water absorption by immersion (in accordance with NBN B 15-215).

The compressive strength was determined on 6 concrete cubes with 15 cm sides aged 28 days. The samples were removed from moulds 24 hours after preparation, and then kept in climate chamber (20 $\pm$ 2°C and more than 95% RH) until the test date. The tests are executed in accordance with the recommendations of standard NBN EN 12390-3 (2002), using a TONI-MFL machine equipped with a servo-hydraulic cylinder with force capacity of 4000 kN. For formulation No.4, cubes were prepared by means of extended compaction on the vibrating table (around 1 minute instead of 10 seconds).

The water absorption by immersion was determined on 3 concrete cubes with edges of 10 cm aged 28 days. The samples were removed from the moulds 24 hours after preparation, and then kept in a climate chamber (20 $\pm$ 2°C and more than 95% RH) until the test date. The test is executed in accordance with the recommendations of standard NBN B 15-215. It consists of determining the weight of the water-saturated sample ($M_1$), and the weight of the sample after drying in ventilated oven at 105°C ($M_2$).

The coefficient of total water absorption (A) is calculated as follows:

$$A = \frac{M_1 - M_2}{M_2} \times 100[\%]$$

The results of the tests are presented in **Table 4** for three LAC samples according to the invention, compared with one sample of standard concrete.

Table 4: Physical properties of low-activation concrete samples of the invention compared to standard concrete.

| Concrete formulation | | | | |
|---|---|---|---|---|
| **Sample** | **No. 1** | **No. 2** | **No. 3** | **No. 4** |
| **Cement** | Grey cement CEM III/A | White cement CEM I | White cement CEM II/A-LL | High-alumina cement |
| **Aggregates** | Common limestone | Lhoist Limestone BE1111.403.08 | Lhoist Limestone BE1111.403.08 | Lhoist Limestone BE1111.403.08 |
| **Characteristic** | Fresh concrete | | | |
| **Spread (mm)** | 200 | 180 | 200 | 40 |
| **Consistency class (slump)** | S4 | S4 | S4 | S4 |
| **Density (kg/m$^3$)** | 2370 | 2250 | 2230 | ND |
| **Air content (%)** | 1.3 | 3.1 | 2.8 | ND |
| | Hardened concrete | | | |
| **Density (kg/m$^3$)** | 2370 $\pm$ 10 | 2180 $\pm$ 15 | 2200 $\pm$ 23 | 2210 $\pm$ 12 |
| **Compressive strength (N/mm$^2$)** | 47.1 $\pm$ 1.2 | 31.0 $\pm$ 1.6 | 39.0 $\pm$ 0.4 | 55.4 $\pm$ 2.9 |
| **Coefficient of water absorption (%)** | 5.1 $\pm$ 0.2 | 9.3 $\pm$ 0.0 | 8.9 $\pm$ 0.2 | 4.1 $\pm$ 0.1 |

The results obtained for the LAC samples No. 2 and No. 3 (concrete prepared from high-purity limestone and white cement) are very similar to those of sample No. 1 (being standard concrete).

This indicates that these concretes are perfectly fine for the casting of interior walls (or inner part of the wall) of a particle accelerator vault (or particle accelerator, or any cyclotron-based facility).

The fresh concrete mixture of sample No. 4 (concrete prepared from high-purity limestone and high-alumina cement) has a very low fluidity, even with the addition of admixture. Consequently, for on-site casting, the formulation is to be further adapted. This is well within the practice of those skilled in the art.

## Atomic composition

A chemical analysis of the low activation concretes of the invention, determining the elemental composition of the material, has been performed using X-ray fluorescence (XRF). The XRF analysis is carried out on fused beads. Because of the intense heating during the preparation of the fused beads, part of the concrete mass is lost. This mass loss is called "loss on ignition" (LOI) and corresponds mainly to the volatilization of the bound water and carbon dioxide ($CO_2$) from the combustion of carbonates. This LOI is very important in LAC's as they contain large amounts of limestone aggregates ($CaCO_3$). To determine the amount of hydrogen remaining in the concretes, the water/cement ratio used in the formulation of the different LAC's is considered. In practice, part of the water used during the concrete mixing will disappear with time leaving only the bounded water inside the cured concrete.

The atomic compositions of low activation concretes type EI and S1 of the invention are compared to standard concrete in **Table 5.**

**Table 5:** Atomic composition of standard concrete and LAC (weight fractions).

| Element | Standard Concrete | LAC EI | LAC S1 |
|---|---|---|---|
| H | 1.00% | 0.721% | 0.753% |
| C | 0.10% | 8.915% | 8.724% |
| O | 52.91% | 47.772% | 49.214% |
| Na | 1.60% | 0.076% | 0.076% |
| Mg | 0.20% | 0.240% | 0.156% |
| Al | 3.39% | 0.275% | 6.776% |
| Si | 33.70% | 1.241% | 0.089% |
| K | 1.30% | 0.033% | 0.0158% |
| Ca | 4.40% | 40.514% | 34.05% |
| Fe | 1.40% | 0.063% | 0.056% |
| S | 0 | 0.088% | 0.008% |
| Cu | 0 | 0.008% | 0.016% |
| Sr | 0 | 0.034% | 0.0442% |
| Ru | 0 | 0.02% | 0.02% |

For the standard concrete, the Portland concrete composition provided in Compendium of Material Composition Data for Radiation Transport Modeling by R.J. McConn Jr. et al, PNNL-15870 Revision 1 (2011) is used.

From **Table 5,** it can be seen that the LAC EI of the invention exhibits a clear reduction of the concentration of Na, Al and Si compared to the standard concrete, while the Mg concentration remains at about the same level. As Na, Al, Si, and Mg are the major elements leading to the production of $^{22}$Na, a sensible reduction of $^{22}$Na production is expected when replacing standard concrete by the LAC EIof the invention.

For LAC type S1 of the invention, containing high-alumina cement, the amount of Al is multiplied by two with respect to the standard concrete, while Na, Mg and Si exhibit a similar concentration as in the LAC EI. Therefore, a somewhat larger production of $^{22}$Na when using LAC S1 can be expected compared to using LAC EI. However, the overall $^{22}$Na production will still be lower due to the lowering of the amount of Na and Si when using LAC S1 compared to using standard concrete.

## Example 4: Nuclear waste reduction in medical accelerators

The LLW amount reduction obtained in four typical medical accelerators covering a large energy range, using the low-activation concrete of the invention, is evaluated.

More particularly, the following IBA accelerators are considered:

- the vault for a *Cyclone® 70 (C70)* installation;
- the S2C2 cyclotron vault for the *Proteus®ONE* system;
- the C230 cyclotron vault for the *Proteus®PLUS* system; and
- the classical vault for a *Cyclone® 18p* (C18p) system.

These four systems were studies using Monte Carlo (MC) simulations with the MCNPX 2.7.0 code developed by Los Alamos National Laboratory (LANL) in the USA, sharing the same techniques to determine the production rates of the different long-lived isotopes produced in shielding concrete, i.e.:

- the analysis starts by dividing the inner walls of each vault into small cells with a volume 50 x 50 x 10 $cm^3$, the last coordinate corresponding to the cell depth. Then, the neutron flux crossing these cells is determined and multiplied by the neutron capture cross section for each desired isotope, giving the isotope production rate per source particle. The measured neutron capture cross sections for $^{151}$Eu, $^{153}$Eu, $^{59}$Co and $^{133}$Cs are available in evaluated nuclear data library ENDF/B-VII.0 from IAEA or Los Alamos National Laboratory;
- for spallation products, a different approach is needed as measured cross sections for the production of these isotopes are not available. They result from the interaction of high-energy particles with target nuclei and are recorded in MCNPX using a special tally. The production rates of these residuals are determined in the same small cells as for neutron capture (NC) elements.

Once the production rates of the long-lived isotopes are determined, they are multiplied by the beam workload (i.e. the number of protons) delivered by the accelerator per unit of time and divided by the decay constant $\lambda$ to obtain the isotope specific activities. The time evolution of the different activities is computed using the Bateman equation, taking into account isotope decay with time. For simplicity, the beam workloads are considered to remain constant over a period of 20 years before a complete shutdown of the facility afterwards.

The specific activity $A_i$ for each type of isotope *i* is determined at the facility end-of-life, as a function of location inside the vault and depth value. Finally, the sum of $A_i$ / $CL_i$ is computed and compared to the nuclear waste limit $\Sigma$ $A_i$ / $CL_i$ = 1 (CL being the Clearance Level).

The sum over all produced isotopes $\Sigma$ $A_i$ / $CL_i$ is called the Clearance Index (CI) and should remain smaller than 1 to consider the activated material as non-nuclear waste.

For each case, a first analysis was performed using standard concrete, considering the Eu, Co and Cs average concentrations presented in **Table 2.** The analyses were then repeated using LAC types EI and S1 with the concentrations obtained from individual component measurements as also given in **Table 2.**

## A. The C70 Vault

The vault for a Cyclone® 70 (C70) installation is modelled using MCNPX.

The determination of the concrete activation is based on a continuous operation 24/7 of the cyclotron with its maximal beam current of 700 $\mu$A, with the exception of 1 month/year shutdown for maintenance. Considering that beam losses only represent 5% of the accelerated beam, one obtains an annual workload of 700 $\mu$A x 8000 hour/year x 11/12 x 0.05 = 256,700 $\mu$A h/year.

It is considered that all the beam losses occur at the maximal energy of 70 MeV, the lost protons striking the vacuum chamber made of Aluminium.

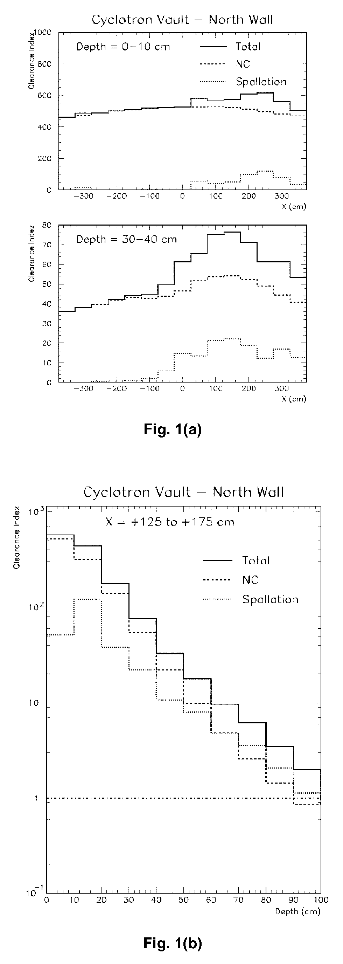

The results obtained with standard concrete for the C70 vault walls were plotted in figures. For example, **Figures 1(a) and 1(b)** present the results obtained with standard concrete for the North wall of the vault, showing the evolution of the Clearance Index along (a) and inside (b) the North wall of the C70 vault, respectively. As the neutron maximal energy for this installation is above the thresholds for the production of spallation isotopes, the production of $^{22}$Na together with the NC elements must be taken into account. In the inner layer (0-10 cm), the major contribution to the CI came from the NC elements, the spallation contribution remaining below 20%. However, it could be seen from the distribution obtained in the layer corresponding to 30-40 cm depth values that the spallation contribution increased with depth. From the plotted depth profile in **Figure 1(b),** it could be seen that this contribution even became the largest contribution at large depth values. Without being bound to theory, this behavior is due to the longer attenuation length for high-energy neutrons compared to low-energy neutrons, resulting in a hardening of the neutron energy spectrum with depth and an increase of the relative proportion of high-energy neutrons compared to low-energy/thermal neutrons. Based on the CI depth profile exhibited in **Figure 1(b),** the results showed that a decommissioning layer of 100 cm is needed for the North wall and that the thickness of the decommissioning layer ranges between 80 cm and 120 cm for the various C70 shielding walls. That results in a total volume of nuclear wastes of 381 $m^3$ after 20 years of operation, using standard concrete.

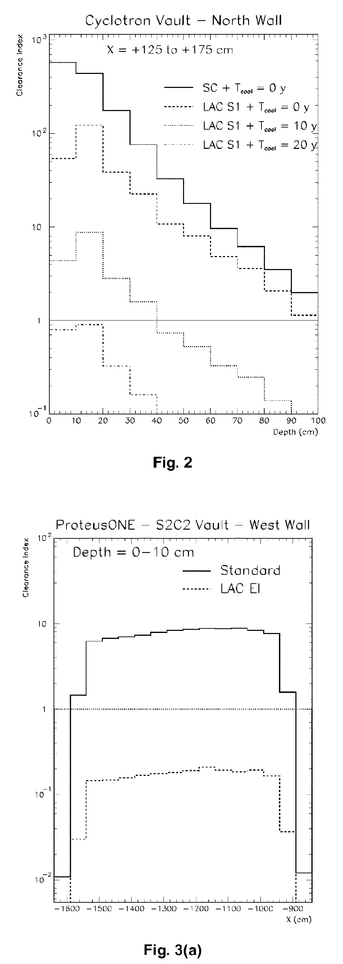

Furthermore, the evolution of CI versus depth inside the North wall was plotted and compared in **Figure 2** when using standard concrete and LAC S1. Unfortunately, a significant decrease of the CI values at large depth was not observed and, hence, no significant gain on the thickness of the decommissioning layer. Without being bound to theory, those results are due to the fact that, at large depth values, the major contribution to the CI comes from the spallation isotopes and not from the NC elements. Nevertheless, a significant decrease of the CI values is observed when considering their evolution with an additional cooling time. In fact, as shown in **Figure 2,** the CI values decreased by a factor 10 after 10 years and became even smaller than 1 after 20 years. A similar behavior is observed for the other walls.

Furthermore, the evolution with time of the total nuclear waste volumes obtained with standard concrete and LAC S1 were compared. With standard concrete, the nuclear waste volume will decrease very slowly with time, from $381m^3$ at facility EOL down to $283m^3$ after 20 years (decrease by 25%). On the contrary, the nuclear waste volume obtained with LAC S1 will decrease much faster, from $312m^3$ at facility EOL down to 139 $m^3$ after 10 years (decrease by 55%) and 10 $m^3$ after 20 years (decrease by 97%).

Although the use of LAC in the C70 vault thus does not allow an immediate elimination of nuclear waste production, the decommissioning costs can be reduced as all the produced nuclear wastes can yet be released after 20 years, compared to about 100 years when using standard concrete.

## B. The S2C2 Vault

The vault of the S2C2 together with the major pieces of equipment, such as the cyclotron, the degrader and the beam lines quadrupoles, are modelled using MCNPX. As the proton beam is extracted from the S2C2 with a maximal energy of 230 MeV, a degrader is needed to modulate the beam energy before patient irradiation.

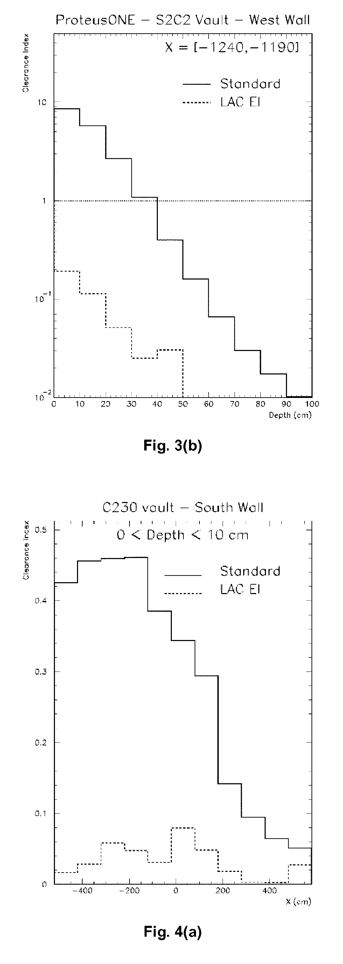

The results obtained for the walls of the vault were plotted in figures. For example, **Figures 3(a) and 3(b)** present the clearance index values in the West wall of the S2C2 vault obtained using two different types of concrete, showing the evolution of the Clearance Index along (a) and inside (b) the West wall of the S2C2 vault.

The evaluation of the thicknesses of the different decommissioning layers around the S2C2 vault are listed in **Table 6.**

Using standard concrete, the total quantity of nuclear wastes generated after 20 years of operation amounts to 88.1 $m^3$. In **Table 6,** this is compared with using LAC type EI instead of standard concrete.

Table 6: Thickness of decommissioning layers around the S2C2 vault obtained with standard and LAC EI concretes.

| Wall | Standard concrete | LAC EI | LAC EI + 5y cooling |
|---|---|---|---|
| West | 40 cm | 0 cm | 0 cm |
| East | 20 cm | 0 cm | 0 cm |
| South | 40 cm | 0 cm | 0 cm |
| North | 120 cm | 50 cm | 0 cm |
| Maze | 50 cm | 0 cm | 0 cm |
| Floor | 50 cm | 0 cm | 0 cm |
| Roof | 50 cm | 0 cm | 0 cm |
| Total Volume | 88.1 $m^3$ | 2.0 $m^3$ | 0 $m^3$ |

For West, East, South, and Maze wall surrounding the S2C2, using LAC type EI instead of standard concrete, a striking decrease of the Clearance Index well below the limit of 1 was observed in the first 10 cm of concrete. This is demonstrated in **Figures 3(a) and 3(b)** for the West wall. The production of low level activated waste thus vanishes for these walls using LAC of the invention. The production of nuclear waste also disappeared in the roof and the floor of the S2C2 vault.

Nevertheless, as the north wall is right in front of the energy degrader emitting high-energy neutrons, the spallation contribution is to be taken into account, increasing with depth of these walls. Due to smaller concentrations of Na, Al, and Si in LAC EI compared to standard concrete (cf. **Table 5** in atomic composition section of Example 3), the production of $^{22}$Na is already strongly reduced in the North wall using LAC EI. However, there still remains a small area inside the North wall where the clearance index exceeds the limit of 1. This area covers a surface of about 2 x 2 $m^2$ around the beam pipe position and extends to a depth of 50 cm. The amount of remaining nuclear waste obtained with LAC EI is therefore of the order of 2 $m^3$ instead of the 88.1 $m^3$ using standard concrete.

As the remaining concrete activation is due to the production of $^{22}$Na, some cooling time after the facility shutdown can be considered to completely eliminate the $^{22}$Na production. Indeed, the assumption can be made that the structure will not immediately be decommissioned after the facility shutdown. In addition, there will most probably be a ramp down period of a few years before the complete shutdown of the system. Therefore, a period of five years between the official facility shutdown and the decommissioning phase is considered. With this deferred decommissioning, the maximal value of the clearance index in the North wall drops to 0.76, below the limit of 1.

From **Table 6,** it can further be seen that without cooling period, the quantity of nuclear waste produced after 20 years of operation is reduced to 2.0 m$^3$ when using LAC type EI of the invention, instead of 88.1 m$^3$ when using standard concrete. If an additional cooling period of 5 years is considered, the amount of nuclear waste generated by the facility is even brought down to 0 m$^3$ when using LAC EIof the invention. The replacement of standard concrete by LAC type EI for the inner parts of the S2C2 vault walls can thus completely eliminate the production of nuclear wastes (due to both NC isotope production and production of spallation isotopes).

### C. The C230 Vault

The vault housing of the C230 cyclotron together with the Energy Selection System (ESS) has been modelled and the concrete activation has been evaluated in the four side walls, C230 roof and ESS roof.

The concrete activation analysis was performed using either the standard concrete or LAC type EI, with the EU, Co and Cs concentrations listed in **Table 2.** The results obtained were, as in section A and B, also plotted in figures.

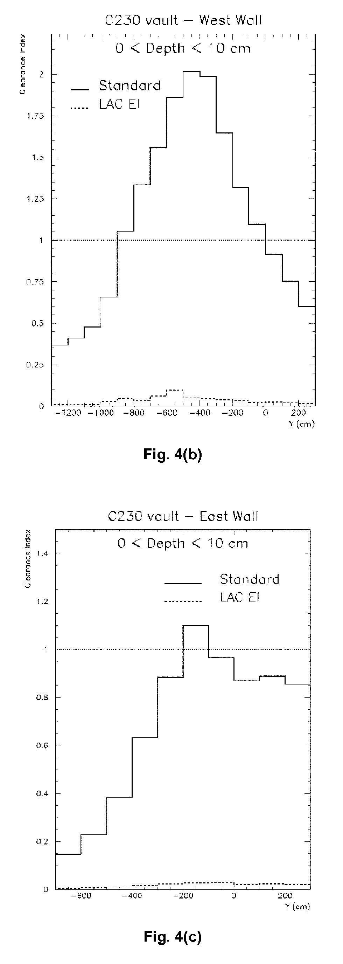

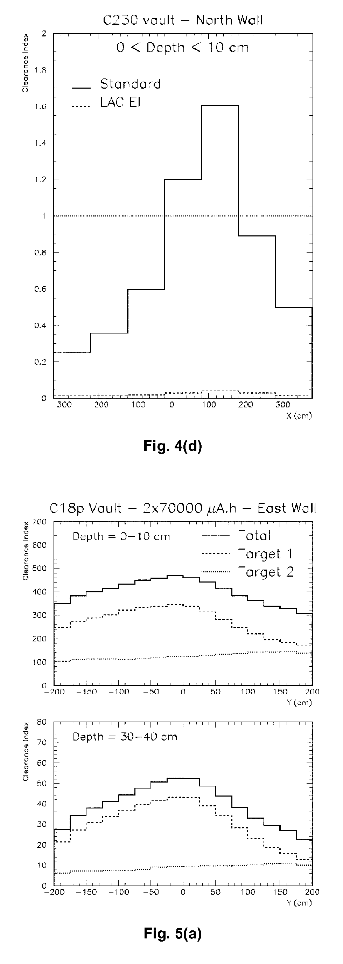

The results obtained in the 0 to 10 cm depth of the four side walls are shown in **Figure 4.** Comparing the results using standard concrete, the CI value was slightly above 1 in three of the four studied side walls.

Furthermore, comparing the results for the C230 roof and ESS roof (figures not shown), the ESS roof can be considered as activated up to a depth of 50 cm, whereas the CI values obtained for the C230 roof were above 1 in the first 10 cm of the roof. Hence, the standard concrete can still be considered activated at the facility EOL.

As can be further seen in **Figure 4,** the clearance index obtained using LAC type EI, instead of standard concrete, dropped dramatically below 1 in all side walls, even in the most inner layer. Furthermore, for both the ESS roof and the C230 roof (figure not shown), the CI remained below 1 in the first layer of 10 cm. Those results imply that no nuclear wastes will be produced in the LAC after 20 years of operation, i.e. the concrete will not be considered as activated at the facility EOL.

The thickness of the different decommissioning layers around the C230 vault obtained with standard and LAC EI concretes are given in **Table 7.**

**Table 7:** Thickness of decommissioning layers around the C230 vault obtained with standard and LAC EI concretes

| Wall | Standard Concrete | LAC EI |
|---|---|---|
| West | 20 cm | 0 cm |
| East | 10 cm | 0 cm |
| South | 0 cm | 0 cm |
| North | 20 cm | 0 cm |
| ESS roof | 40 cm | 0 cm |
| C230 Roof | 10 cm | 0 cm |
| Total Volume | 30.3 m$^3$ | 0.0 m$^3$ |

From the results, it can be seen that when using standard concrete, the total amount of nuclear waste produced at facility EOL can be estimated to 30.3 m$^3$. Moreover, one cannot expect a significant volume reduction with time as most of the activation is due to the presence of [152]Eu.

When using LAC type E1 instead of standard concrete, however, no nuclear wastes will be produced in the side walls, the C230 roof and the ESS roof after 20 years of operation. Hence, with LAC type EI, the amount of nuclear waste can thus be brought down to 0.0 m$^3$, even right after facility EOL.

### D. The C18p Vault

The vault housing of the C18p cyclotron is modelled using MCNPX. The implemented C18p model contains the Cyclone® 18p itself equipped with local shielding doors and the vault made of two meter thick concrete walls. The machine is operated in dual beam mode with two 18F targets disposed in back-to-back configuration.

Three scenarios for the beam usage are considered for the annual beam workloads, corresponding to light, standard and heavy duty use of the facility, respectively:

a) 70 $\mu$A/target x 2 hours/day x 250 days/year =2 x 35,000 $\mu$A h/year;
b) 100 $\mu$A/target x 2 hours/day x 350 days/year = 2 x 70,000 $\mu$A h/year; and
c) 100 $\mu$A/target x 4 hours/day x 350 days/year = 2 x 140,000 $\mu$A h/year.

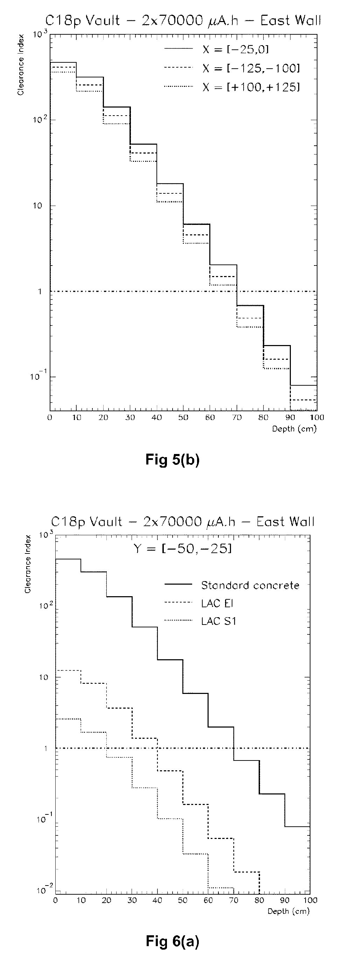

The results obtained along and inside the East wall of the C18p vault facing one of the $^{18}$F targets when using the standard scenario are displayed in **Figure 5.**

The evolution of the Clearance Index (CI) along and inside the East wall using standard concrete are plotted in **Figure 5(a)** and show that in the inner layer, corresponding to depth values of 0-10 cm, the CI reaches a maximal value of about 500. This value is reduced by a factor 10 in the layer corresponding to 30-40 cm depth values, but remains nevertheless much larger than the limit of 1. As shown in **Figure 5(b),** a depth value of 70 cm must be reached to obtain a CI value below 1. Similar results are obtained for the other walls as well as for the roof. It is to be noted that only NC isotopes are produced in the C18p walls, the maximal neutron energy being too low to generate spallation isotopes.

These results are translated into the amounts of nuclear wastes presented in **Table 8** below, obtained after 20 years of operation using standard concrete with the three different scenarios. From these results it can be seen that even in the case of light usage, one ends up with 43.8 m$^3$ nuclear waste. Further increases by 22% and 28% are obtained with the standard and heavy usages, respectively.

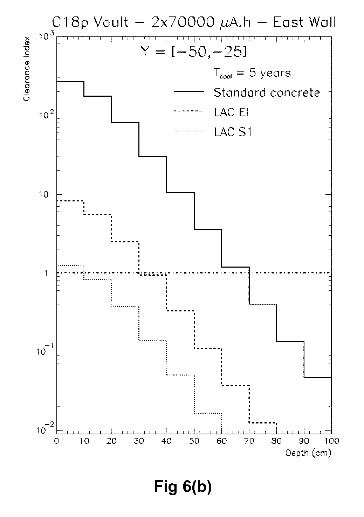

Furthermore, the CI evolution with depth inside the East wall for the standard concrete and the two different LAC's were also compared. The results are shown in **Figure 6.**

In **Figure 6(a),** the CI is computed right after the facility shutdown, while in **Figure 6(b)** an additional cooling time of 5 years has been considered between the facility end-of-life (EOL) and the decommissioning phase. The results showed that using the LAC of the invention, the thickness of the activated layer is reduced by a factor 2 or 4 for LAC type EI and S1, respectively. With the additional cooling time, the activated concrete layer has even completely vanished due to using the LAC type S1 of the invention.

The remaining nuclear waste volumes are also presented in **Table 8** for the different scenarios using LAC of the invention. With LAC type EI, the volumes are divided by 2 compared to standard concrete. With LAC type S1, it becomes possible to completely eliminate the problem of nuclear waste production for light and standard usage. One is left with a small amount of 12.3 m$^3$ in case of heavy usage.

**Table 8:** Amounts of nuclear wastes obtained in the three usage scenarios considering different types of concrete.

| Concrete type | Light usage | Standard usage | Heavy usage |
|---|---|---|---|
| Standard | 43.8 m$^3$ | 53.3 m$^3$ | 56.2 m$^3$ |
| LAC EI | 19.2 m$^3$ | 26.8 m$^3$ | 26.8 m$^3$ |
| LAC S1 | 0 m$^3$ | 12.3 m$^3$ | 19.2 m$^3$ |
| LAC S1 + 5y cooling | 0 m$^3$ | 0 m$^3$ | 12.3 m$^3$ |

### E. Decommissioning costs

The use of low-activation concrete will introduce some additional costs at the construction time as these LAC's are slightly more expensive than standard concrete. However, this additional cost absolutely does not weigh up to the considerable cost reduction obtained at the decommissioning phase due to the strong reduction of the remaining amount of low-level radioactive waste (as indicated in previous sections A to D), if any, still to handle.

From the examples and results above, the potential reduction of low level nuclear waste produced in four typical IBA cyclotron vaults was evaluated using Monte Carlo simulations. Using standard concrete, the volumes of activated concrete generated after 20 years of intensive usage range between 30 m$^3$ and 380 m$^3$. When replacing in the inner walls the standard concrete by low-activation concrete of the invention, it is possible to reduce or even completely eliminate the concrete activation. To obtain these results, a dismantling scenario deferred by a period of 5 years after facility shutdown has been considered. This kind of deferred decommissioning is generally accepted by nuclear agencies in the framework of nuclear power plant dismantling. As far as for example the Cyclone® 70 is concerned, a cooling period of 20 years would be required to completely eliminate the activated concrete, to be compared with a period of about 100 years or more to eliminate the nuclear wastes generated with standard concrete.

From the description and the examples above, it follows that the present invention thus provides compositions of low-activation concrete, (further) reducing the content of elements such as Europium, Cobalt and Cesium responsible for the production of long-lived isotopes with low-energy neutrons, when compared to standard concrete compositions and compositions for low-activation concrete already known in the art.

In particular, in the compositions of the low activation concrete according to the present invention, the concentration of Europium is reduced to an unexpected degree compared to compositions for low-activation concrete already known in the art.

Furthermore, the present invention thus provides compositions of low-activation concrete which, next to reducing the content of elements such as Europium, Cobalt and Cesium, at the same time also reduce the content of elements such as Al, Na, and Mg responsible for $^{22}$Na production with high-energy neutrons. The overall concrete activation, i.e. the activation caused by capture of both low-energy neutrons and high-energy neutrons in the concrete, is thus reduced when compared to standard concrete compositions and compositions for low-activation concrete already known in the art.

It has been shown that is advantageous for cyclotron-based systems to carefully select the components, more particularly, the aggregate and cement, used for forming the low-activation shielding concrete to reduce, or even eliminate completely, the elements responsible for the production of long-lived isotopes by neutron capture, i.e. Eu, Co and Cs. Moreover, additionally carefully selecting the aggregate and cement to also being poor in Na, Mg, and Al (and/or even Si) reduces the production of $^{22}$Na as well.

In this way, using the LAC of the present invention in the inner walls of radiation protection structures (e.g. in particle accelerators), the amount of produced Low Level radioactive Waste can be further reduced or even eliminated, when compared to using standard concrete or low-activation concrete compositions known in the art. Hence, less special storage area is needed and the related cost of the corresponding waste treatment at the end-of-life of the installations involved (cost for dismantling) can also significantly be (further) reduced.

With the compositions of low-activation concrete of the present invention, the quality of the concrete is maintained, when compared to standard concrete compositions and compositions for low-activation concrete available in the art.

The important reduction of nuclear waste production by medical accelerators using the low-activation concrete of the present invention will have an important impact on the ecological footprint, being considerably reduced when compared to concrete compositions available in the art.

For the Proton Therapy market, the low-activation concrete of the present invention even eliminates the concrete activation problem due to the use of fixed-energy cyclotrons compared to variable energy synchrotrons.

**Claims**

1. A low-activation concrete comprising high-purity limestone aggregate and white cement, or high-purity limestone aggregate and aluminous cement.

2. The low-activation concrete according to claim 1, wherein the concrete comprises 75% to 95% by weight high-purity limestone aggregate.

3. The low-activation concrete according to claim 1 or 2, wherein the concrete comprises 75% to 85% by weight high-purity limestone aggregate.

4. The low-activation concrete according to any of claims 1 to 3, wherein the high-purity limestone aggregate comprises more than 97.0 % by weight $CaCO_3$, preferably between 97.0 % and 98.5 % by weight $CaCO_3$.

5. The low-activation concrete according to any of claims 1 to 4, wherein the high-purity limestone aggregate comprises between 54.3 % and 55.2 % by weight CaO, between 0.8 % and 1.0 % by weight MgO, between 0.2 % and 0.6 % by weight $SiO_2$, between 0.05 % and 0.1 % by weight $Fe_2O_3$, less than 0.3 % by weight $Al_2O_3$, and less than 0.1 % by weight $Na_2O$.

6. The low-activation concrete according to any of claims 1 to 5 comprising high-purity limestone aggregate and white cement, wherein the white cement comprises 60% to 68% by weight CaO, 15% to 22% by weight $SiO_2$, 2% to 6% by weight $Al_2O_3$, 0.1% to 0.18% $Na_2O$, and 1% to 3% MgO.

7. The low-activation concrete according to claim 6, wherein the white cement comprises 63% to 66% by weight CaO, 19% to 21.5% by weight $SiO_2$, 3% to 5% by weight $Al_2O_3$, 0.14% to 0.17% $Na_2O$, and 1.5% to 2.5% MgO.

8. The low-activation concrete according to claim 6 or 7, wherein the Eu content is less than 0.04 ppm, the Co content is less than 0.80 ppm, and the Cs content is less than 0.1 ppm.

9. The low-activation concrete according to claim 8, wherein the Eu content is less than 0.025 ppm, the Co content is less than 0.25 ppm, and the Cs content is less than 0.07 ppm.

10. The low-activation concrete according to any of claims 1 to 5 comprising high-purity limestone aggregate and aluminous cement, wherein the aluminous cement comprises more than 50.0% by weight $Al_2O_3$, preferably more than 68.5% by weight $Al_2O_3$.

11. The low-activation concrete according to claim 10, wherein the Eu content is less than 0.01 ppm, the Co content is less than 0.26 ppm, and the Cs content is less than 0.03 ppm, preferably the Eu content is less than 0.009 ppm, the Co content is less than 0.15 ppm, and the Cs content is less than 0.03 ppm.

12. Use of the low-activation concrete according to any one preceding claims for forming an interior wall of a particle accelerator vault.

13. Use of the low-activation concrete according to claim 12 in a multi-layered wall comprising a physical separation.

14. Use of the low-activation concrete according to claim 13 in a two-layered wall, wherein the inner layer of the wall comprises the low-activation concrete and the rest of the wall comprises standard concrete.

15. Use of the low-activation concrete according to claims 13 or 14, wherein the physical separation between the layers comprises a plastic sheet.

**Fig. 1(a)**

**Fig. 1(b)**

Cyclotron Vault − North Wall

**Fig. 2**

ProteusONE − S2C2 Vault − West Wall

**Fig. 3(a)**

Fig. 3(b)

Fig. 4(a)

Fig. 4(b)

Fig. 4(c)

**Fig. 4(d)**

**Fig. 5(a)**

C18p Vault − 2x70000 μA.h − East Wall

Fig 5(b)

C18p Vault − 2x70000 μA.h − East Wall

Fig 6(a)

C18p Vault — 2x70000 $\mu$A.h — East Wall

Y = [−50,−25]

$T_{cool}$ = 5 years

—— Standard concrete
- - - LAC EI
······· LAC S1

Clearance Index

Depth (cm)

**Fig 6(b)**

Europäisches
Patentamt

European
Patent Office

Office européen
des brevets

**EUROPEAN SEARCH REPORT**

Application Number

EP 16 17 8315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Masaharu Kinno ET AL: "Low-Activation Reinforced Concrete Design Methodology (9) &#xFF0D; Low-Activation Concrete Based on Limestone Aggregates and White Cement&#xFF0D;", 31 August 2007 (2007-08-31), XP055332944, Retrieved from the Internet: URL:https://repository.lib.ncsu.edu/bitstream/handle/1840.20/31191/HW1_4.pdf?sequence=1&isAllowed=y [retrieved on 2017-01-06] | 1-9, 12-15 | INV. C04B28/02 C04B28/06 G21F1/04 |
| A | * Section: Introduction; figures 1, 2; tables 3-5 * | 10,11 | |
| X | MASAHARU KINNO ET AL: "Raw Materials for Low-Activation Concrete Neutron Shields", JOURNAL OF NUCLEAR SCIENCE AND TECHNOLOGY, ATOMIC ENERGY SOCIETY OF JAPAN, JP, vol. 39, no. 12, 1 December 2002 (2002-12-01), pages 1275-1280, XP008142578, ISSN: 0022-3131, DOI: 10.3327/JNST.39.1275 | 1,10-15 | |
| A | * page 1277, left-hand column, lines 8-9; figure 2; table 3 * | 2-9 | TECHNICAL FIELDS SEARCHED (IPC) C04B G21F |
| X | Ken-Ichi Kimura ET AL: "Low-Activation Reinforced Concrete Design Methodology -Fundamental Investigation for various Types of Low-Activation Concrete", 31 December 2007 (2007-12-31), XP055332942, Retrieved from the Internet: URL:http://www.fujita.co.jp/tech_center/img/up/2007/2007-04.pdf [retrieved on 2017-01-06] | 1,12-15 | |
| A | * figures 2, 4; table 5 * | 2-11 | |

-/--

The present search report has been drawn up for all claims

| Place of search | Date of completion of the search | Examiner |
|---|---|---|
| The Hague | 9 January 2017 | Süzük, Kerem Güney |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 16 17 8315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S62 35295 A (FUJITA CORP) 16 February 1987 (1987-02-16) | 1,12-15 | |
| A | * abstract * | 2-11 | |
| | ----- | | |
| A | Kerneos: "SECAR 51 - Product data sheet", , 23 May 2008 (2008-05-23), XP055333017, Retrieved from the Internet: URL:http://www.secar.net/documents/FC-S51-RE-GB-KFR.pdf [retrieved on 2017-01-06] * the whole document * | 1-15 | |
| | ----- | | |
| A | Kerneos: "SECAR 71 - Product data sheet", , 31 March 2008 (2008-03-31), XP055333018, Retrieved from the Internet: URL:http://www.secar.net/documents/FC-S71-RE-GB-KFR.pdf [retrieved on 2017-01-06] * the whole document * | 1-15 | |
| | ----- | | |

TECHNICAL FIELDS
SEARCHED     (IPC)

The present search report has been drawn up for all claims

| Place of search | Date of completion of the search | Examiner |
|---|---|---|
| The Hague | 9 January 2017 | Süzük, Kerem Güney |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

**EP 3 266 754 A1**

## ANNEX TO THE EUROPEAN SEARCH REPORT
## ON EUROPEAN PATENT APPLICATION NO.

EP 16 17 8315

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2017

| Patent document cited in search report | Publication date | Patent family member(s) | Publication date |
|---|---|---|---|
| JP S6235295 A | 16-02-1987 | NONE | |

For more details about this annex : see Official Journal of the European Patent Office, No. 12/82

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008157801 A
- JP 2006038467 B
- JP 2001305278 B
- JP 2004256376 B
- JP 2008013426 B
- JP 2008239362 B
- EP 2128872 A
- JP 2007269516 B

**Non-patent literature cited in the description**

- **SUZUKI, A. et al.** *Journal of Nuclear Science and Technology,* 2001, vol. 38 (7), 542-550
- **KINNO, M. et al.** *Journal of Nuclear Science and Technology,* 2002, vol. 39 (12), 1275-1280
- **KINNO, M. et al.** *Progress in Nuclear Science and Technology,* 2011, vol. 1, 28-31